(19) Europäisches Patentamt
European Patent Office
Office européen des brevets

(11) **EP 0 654 622 B1**

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(51) Int Cl.⁶: **F16H 59/36**

(21) Anmeldenummer: 93118597.9

(22) Anmeldetag: 18.11.1993

(54) **Elektronisches Steuergerät für ein Kraftfahrzeug**

Electronic control device for motor vehicle

Dispositif de commande électronique pour automobile

(84) Benannte Vertragsstaaten:
**DE FR GB IT**

(43) Veröffentlichungstag der Anmeldung:
**24.05.1995 Patentblatt 1995/21**

(73) Patentinhaber: **SIEMENS AKTIENGESELLSCHAFT**
**80333 München (DE)**

(72) Erfinder: **Miener, Björn, Dipl.-Ing.**
**D-93051 Regensburg (DE)**

(56) Entgegenhaltungen:
**EP-A- 0 110 857**          **DE-A- 2 338 122**
**FR-A- 2 583 166**

**Beschreibung**

Kraftfahrzeug mit einem elektronischen Steuergerät

Die Erfindung betrifft ein Kraftfahrzeug mit einem elektronischen Steuergerät nach dem Oberbegriff des Anspruchs 1.

Ein Fahrzeug mit den Merkmalen des Oberbegriffs von Anspruch 1 ist aus EP 0 110 857 bekannt, die ein Verfahren betrifft, mittels welchem einem Fahrer signalisiert wird, wann ein höherer Gang eingelegt werden soll. Dazu wird aus Motordrehzahl und Fahrzeuggeschwindigkeit ein Quotient gebildet, der eingelegte Gang bestimmt und die Motordrehzahl mit dem Verhältnis aus den Quotienten des nächsthöheren Ganges und des eingelegten Ganges multipliziert, um einen Rechenwert für die Motordrehzahl zu erhalten, die sich im nächst höheren Gang bei gleicher Fahrzeuggeschwindigkeit einstellen würde, und wird der Rechenwert mit einem vorgegebenen Wert verglichen und ein Signal ausgegeben, wenn der Rechenwert den vorgegebenen Wert übersteigt.

Bei unterschiedlichen Ausstattungen (Serien- oder Sonderausstattung) bestimmter Fahrzeugmodelle unterscheiden sich die elektronischen Steuergeräte lediglich durch die gespeicherten Werte unterschiedlicher Zähnezahlen von Geberrädern der verwendeten Geschwindigkeitsgeber. Die jeweils verwendete Zähnezahl oder ein ihr zugeordnetes Signal muß im Steuergerät abgespeichert sein, da sie (es) zur Ermittlung der Fahrzeuggeschwindigkeit, der Radgeschwindigkeiten oder Raddrehzahlen erforderlich ist, die als Eingangsgrößen beispielsweise bei Antiblockiersystemen, bei Antriebs-Schlupfregelungen, für die Drehzahlbegrenzung der Getriebe-Ausgangswelle (Kardanwelle) u.s.w. benötigt wird.

Unter dem Begriff "Geschwindigkeit" soll in der folgenden Beschreibung nur die Radumfangsgeschwindigkeit in [km/h] eines Fahrzeugrades (Fahrzeuggeschwindigkeit) verstanden werden, obwohl dieser Begriff auch die Drehzahl der Getriebe-Ausgangswelle (Kardanwelle) bzw. der Antriebswelle der Räder in [U/min] bedeuten könnte.

Unterschiedliche Zähnezahlen des Geschwindigkeitsgebers erfordern Steuergeräte mit unterschiedlichen Teilenummern und kostenintensiver, weil mehrfacher Lagerhaltung. Bei Speicherung der Übersetzungsverhältnisse des Getriebes (einschließlich Differential) wäre es eine einfache Rechnung, aus der Motordrehzahl die Radumfangsgeschwindigkeit zu ermitteln. Da aber bei verschiedenen Motorvarianten dieser Fahrzeugmodelle auch Getriebe mit unterschiedlichen Übersetzungsverhältnissen eingesetzt werden, entstünden auf diese Weise noch mehr unterschiedliche Teilenummern mit noch teurerer Lagerhaltung.

Es ist Aufgabe der Erfindung, unterschiedliche Teilenummern und kostenintensive Lagerhaltung der Steuergeräte durch eine in jedes Steuergerät zu integrierende Einrichtung zur selbsttätigen Ermittlung der tatsächlichen Zähnezahl des verwendeten Geberrades zu vermeiden.

Diese Aufgabe wird durch die im Anspruch 1 genannten Merkmale gelöst.

Von besonderem Vorteil ist, daß die Erfindung als zusätzliche Software ohne großen Aufwand in jedes Steuergerät integrierbar ist und somit nur geringe Mehrkosten anfallen.

Manche Fahrzeughersteller schreiben für ihre Neufahrzeuge, bevor diese das Montage-Fließband verlassen, einen Test vor, bei welchem die einzelnen Gänge über jeweils festgelegte Drehzahlbereiche gefahren werden. Bei diesen Fahrzeugen kann bereits vor der Auslieferung das Geberrad mit der richtigen Zähnezahl ermittelt und ein entsprechendes Ausgangssignal (bis zum nächsten Batteriewechsel oder Steuergeräteaustausch) nichtflüchtig abgespeichert werden.

Die Erfindung wird anhand der Zeichnung näher erläutert. Es zeigen:

Figur 1     ein schematisches Schaltbild eines Ausführungsbeispiels der Erfindung,

Figur 2     ein schematisches Getriebediagramm, und

Figur 3     eine Tabelle zu dem schematischen Getriebediagramm.

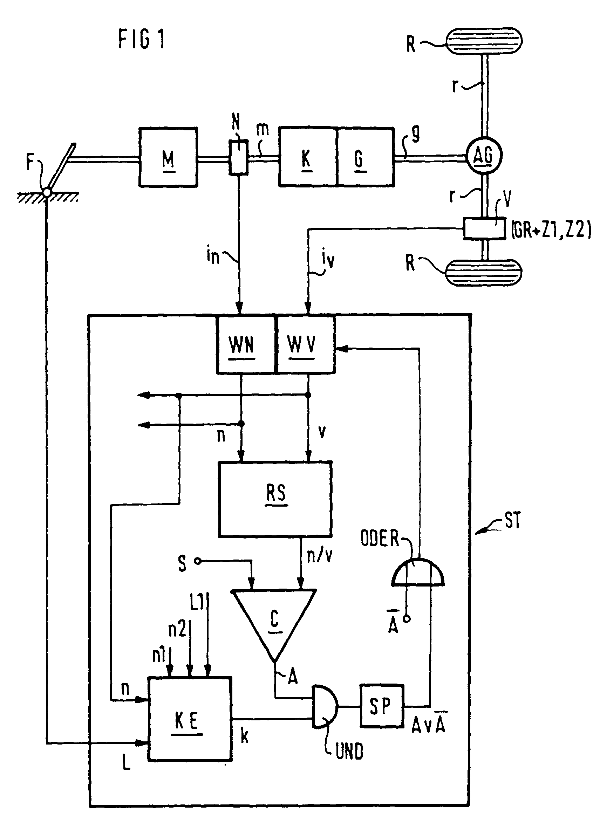

Figur 1 zeigt in schematischer Darstellung den Antriebsstrang eines Kraftfahrzeuges mit einem Motor M, dessen Kurbelwelle m ein Getriebe G antreibt. Zwischen Motor M und Getriebe G ist eine Kupplung K angeordnet, und zwischen Motor M und Kupplung K ist ein Motordrehzahlgeber N auf der Kurbelwelle m angeordnet. Vom Getriebe G werden die Antriebsräder R des Fahrzeuges über eine Getriebeausgangswelle g (Kardanwelle), ein Ausgleichsgetriebe gleichsgetriebe AG (Differential) und Radwellen r angetrieben. Auf wenigstens einer Radwelle r ist ein Geschwindigkeitsgeber V angeordnet, welcher ein Geberrad GR mit einer Zähnezahl $Z1$ oder $Z2$ aufweist. In diesem Ausführungsbeispiel soll $Z1 = 50$ Zähne und $Z2 = 100$ Zähne betragen.

Der Motor M und/oder andere Funktionen des Kraftfahrzeuges werden in bekannter Weise von einem elektronischen (Motor-) Steuergerät ST gesteuert bzw. geregelt und überwacht. Dem Steuergerät werden neben anderen, nicht dargestellten Eingangsgrößen auch die Ausgangsimpulse $i_n$ des Motordrehzahlgebers N und und die Ausgangsimpulse $i_v$ des Geschwindigkeitsgebers V zugeführt.

Die in Figur 1 innerhalb des Steuergerätes (Kasten ST) hardwaremäßig dargestellten Baugruppen sind in Wirklichkeit durch ein Softwareprogramm realisiert.

Die Signale $i_n$ und $i_v$ werden im Motorsteuergerät ST in einer Motordrehzahl-Wandlerschaltung WN und in einer Geschwindigkeits-Wandlerschaltung WV in an sich bekannter Weise zur Motordrehzahl $n[U/min]$ und zur Radumfangsgeschwindigkeit $v[km/h]$ umgewandelt. Dazu muß jedoch die Zähnezahl der Geberräder beider Geber N und V bekannt, d.h., gespeichert sein. Das ist bei der Zahl von Zähnen oder Segmenten des Drehzahlgebers kein Problem, da dieser in der Regel nur eine einzige Ausführung aufweist. Der Geschwindigkeitsgeber V kann jedoch, wie gesagt, ein Geberrad GR mit einer von zwei verschiedenen Zähnezahlen aufweisen.

Zur Ermittlung der Zähnezahl des Geberrades GR ist softwaremäßig eine Rechenschaltung RS vorgesehen, welcher die von der Motordrehzahl-Wandlerschaltung WN ermittelte Motordrehzahl n in U/min und die von der Geschwindigkeits-Wandlerschaltung WV ermittelte Radumfangs-Geschwindigkeit v (= Fahrzeuggeschwindigkeit) in km/h als Eingangssignale zugeführt werden und welche das Verhältnis n/v dieser beiden Werte bildet. Für jeden Getriebegang ist dieses Verhältnis konstant.

Das Ausgangssignal (Verhältnis n/v) der Rechenschaltung RS wird einem Komparator C zugeführt, welcher es mit einem vorgegebenen Schwellwert S vergleicht.

Übersteigt das Verhältnis n/v den Schwellwert S, so gibt der Komparator C ein Ausgangssignal $\overline{A}$ (LOW) ab, welches einem Geberrad GR mit der Zähnezahl Z1 zugeordnet ist.

Ist hingegen das Verhältnis n/v kleiner als der Schwellwert S, so gibt der Komparator ein Ausgangssignal A (HIGH) ab, welches einem Geberrad GR mit der Zähnezahl Z2 zugeordnet ist.

Der Schwellwert S ist so festgelegt, daß er bei Verwendung eines Geberrades mit einer Zähnezahl Z1 in allen Gängen nicht unterschritten wird, bei Verwendung eines Geberrades mit einer Zähnezahl Z2 hingegen in den obersten Gängen unterschritten wird.

Eine Kupplungs-Erkennungseinrichtung KE gibt ein Kupplungssignal k (HIGH) ab, wenn die Kupplung K eingekuppelt ist, d.h., wenn der Motor M mit dem Getriebe G verbunden ist. Es wäre möglich, einen Schalter am Kupplungspedal des Fahrzeuges anzuordnen und diesen abzufragen. Das wäre jedoch in den meisten Fällen ein zusätzlicher Hardware-Aufwand, da ein solcher Kupplungsschalter üblicherweise nicht vorhanden ist. Statt dessen ist die Kupplungs-Erkennungseinrichtung KE softwaremäßig so aufgebaut, daß sie ein Kupplungssignal k abgibt, wenn sich die Motordrehzahl n in einem bestimmten Drehzahlbereich n1<n<n2 befindet, wobei beispielsweise n1=3000U/min und n2=3600U/min ist, und wenn gleichzeitig die beispielsweise mittels eines ohnehin vorhandenen Fahrpedalgebers (F), dessen Ausgangssignal dem Steuergerät ST ebenfalls bereits zugeführt wird, ermittelte Last L (0% ≦ L ≦ 100%, Last L = 0% bei nicht betätigtem Fahrpedal, L = 100% bei vollbetätigt em Fahrpedal) einen vorgegebenen Lastschwellwert L1 (z.B. L1 = 75%) übersteigt:

$$k(n,L) = n1 < n < n2 \wedge L > L1$$

Diese Bedingung wird nur bei eingekuppelter Kupplung erfüllt! Zum Erzeugen eines Kupplungssignals k sind deshalb keine zusätzlichen Eingangssignale oder Bauteile außerhalb des Steuergerätes ST erforderlich. Auch die benötigten Drehzahl- und Lastschwellen sind innerhalb des Steuergerätes softwaremäßig abgespeichert.

Das Ausgangssignal A (n/v > S) des Komparators C und das Ausgangssignal k der Kupplungs-Erkennungseinrichtung KE werden den Eingängen eines Und-Gliedes UND zugeführt, welches an seinem Ausgang ein Signal abgibt, wenn A und k gleichzeitig anliegen.

Durch dieses Signal des Und-Gliedes UND wird ein Speicher SP veranlaßt, seinen Inhalt, welcher bei der Initiierung (erstmalige Inbetriebsetzung oder nach Batteriewechsel) des Steuergerätes ST auf $\overline{A}$ gesetzt wurde, in A zu ändern, diesen Speicherinhalt A nichtflüchtig (d.h., bis zum nächsten Abklemmen der Batterie) gespeichert zu halten und an seinem Ausgang auszugeben.

Der Speicherzustand A oder $\overline{A}$ wird einem Eingang eines Oder-Gliedes ODER zugeführt, dessen anderer Eingang permanent auf $\overline{A}$ (LOW) gelegt ist. Das Ausgangssignal des Oder-Gliedes ODER entspricht dann dem im Speicher SP gespeicherten Signal $\overline{A}$ (LOW) oder A (HIGH). Dieses Ausgangssignal des Oder-Gliedes wird einem Steuereingang der Geschwindigkeits-WandlerschalWV zugeführt. Die Wandlerschaltung WV berücksichtigt die dem an ihrem Steuereingang anliegenden Signal $\overline{A}$ (oder A) zugeordnete Zähnezahl Z1 (oder Z2) oder einen entsprechenden Faktor bei der Ermittlung der Geschwindigkeit v.

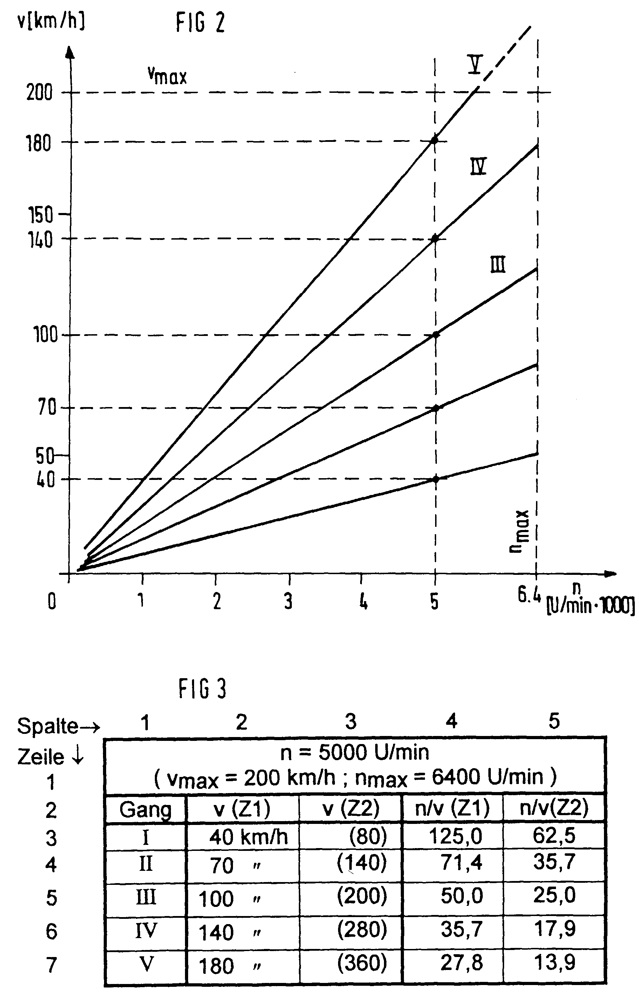

Figur 2 zeigt ein schematisches Getriebediagramm, bei welchem auf der Abszisse die Motordrehzahl n und auf der Ordinate die Radumfangsgeschwindigkeit v (Fahrzeuggeschwindigkeit) aufgetragen sind. Für die einzelnen Getriebegänge sind die Verhältnisse n/v von Drehzahl n und Geschwindigkeit v konstant und im Getriebediagramm als diesen Gängen zugeordnete Geraden I bis V dargestellt.

Wie dem Getriebediagramm in Figur 2 und der Tabelle in Figur 3 zu entnehmen ist, beträgt beispielsweise bei einer Motordrehzahl n = 5000 U/min die Geschwindigkeit im ersten Gang 40 km/h u.s.w., im fünften Gang 180 km/h (Figur 3, Spalte 2, Zeilen 3 bis 7). Unter der Voraussetzung, daß eine Geschwindigkeits-Wandlerschaltung WV verwendet wird, die für ein Geberrad GR mit der Zähnezahl Z1 = 50 ausgelegt ist, muß sie entsprechende Geschwindigkeitssignale v ermitteln.

In Spalte 3 sind in Klammern die Geschwindigkeiten v eingetragen, die in den einzelnen Gängen bei n = 5000 U/min ermittelt würden, wenn bei derselben Geschwindigkeits-Wandlerschaltung WV ein Geberrad GR mit der Zähnezahl Z2 = 100 Anwendung finden würde. Es ergäben sich im vierten Gang 280 und im fünften Gang 360 km/h, was bei der vorausgesetzten Höchstgeschwindigkeit von 200 km/h (Figur 3, Zeile 1) nicht möglich ist.

Drehzahlen und Geschwindigkeiten ändern sich aber in jedem Gang proportional zueinander, das Verhältnis n/v von Drehzahl zu Geschwindigkeit bleibt jedoch innerhalb eines Ganges konstant. Deshalb werden nicht Drehzahlen oder Geschwindigkeiten, sondern deren Verhältnis mit dem Schwellwert verglichen.

In der Tabelle (Figur 3, Spalte 4) ist für jeden Gang das entsprechende Verhältnis n/v eingetragen, beispielsweise ermittelt aus der Motordrehzahl n = 5000 U/min und der zu dieser Drehzahl in den einzelnen Gängen gehörenden Geschwindigkeit v (Spalte 2) bei Verwendung eines Geberrades GR mit Z1 = 50 Zähnen.

Würde statt des Geberrades GR mit Z1 = 50 Zähnen ein Geberrad mit Z2 = 100 Zähnen verwendet, so würden die ermittelten Geschwindigkeiten v zunächst um den Faktor 2 zu hoch sein (Klammerwerte in Figur 3, Spalte 3). Die daraus resultierenden Verhältnisse n/v (Spalte 5) jedoch würden für jeden Gang nur halb so groß sein wie mit dem Geberrad mit Z1 Zähnen.

Wie aus Figur 3, Spalten 4 und 5 ersichtlich, sind für ein Geberrad mit Z1 = 50 Zähnen die Verhältnisse n/v in allen Gängen ≥ 27,8 (Spalte 4), wohingegen sie bei Verwendung eines Geberrades mit Z2 = 100 Zähnen im vierten und fünften Gang ≤ 17,9 (Spalte 5) sind.

Setzt man den Schwellwert S für den Komparator C beispielsweise auf den Wert 21.5, so wird dieser Schwellwert nur von einem mittels eines Geberrades mit Z2 = 100 Zähnen ermittelten Verhältnis n/v im vierten oder fünften Gang unterschritten.

Daraus folgt der Schluß, daß ein Geberrad GR mit Z2 = 100 Zähnen verwendet wird, wenn in einem der Gänge das Verhältnis n/v kleiner als der Schwellwert S ist.

Sobald sich also das Fahrzeug zum erstenmal seit der Initialisierung des Steuergerätes ST im vierten oder fünften Gang befindet und am Ausgang des Komparators C ein Ausgangssignal A erscheint (wenn n/v < 21.5), ist dies ein Zeichen dafür, daß der Geschwindigkeitsgeber V ein Geberrad GR mit der Zähnezahl Z2 = 100 Zähne aufweist und die Geschwindigkeits-Wandlerschaltung WV für die Ermittlung der Geschwindigkeit ein Geberrad GR mit Z2 Zähnen berücksichtigen muß bzw. eine um den Faktor 2 verminderte Geschwindigkeit v ausgeben muß.

Diese Überlegungen beziehen sich auf eine Geschwindigkeits-Wandlerschaltung WV, die für einen Geschwindigkeitsgeber V mit einem Geberrad GR mit Z1 Zähnen ausgelegt ist, d.h., die bei Verwendung eines Geberrades GR mit Z1 Zähnen (wovon bei jeder Initiierung zunächst ausgegangen wird) die Geschwindigkeit richtig ermittelt, und die demnach das Signal v mit "1" multipliziert, solange an ihrem Steuereingang ein Signal $\overline{A}$ anliegt, und die v durch "2" dividiert, sobald an ihrem Steuereingang ein Signal A anliegt.

Eine alternative Ausführungsform der Geschwindigkeits-Wandlerschaltung WV, die für einen Geschwindigkeitsgeber V mit einem Geberrad GR mit Z2 Zähnen ausgelegt ist, d.h., die bei Verwendung eines Geberrades GR mit Z2 Zähnen die Geschwindigkeit richtig ermittelt, bei der aber ebenfalls bei jeder Initiierung zunächst davon ausgegangen wird, daß ein Geberrad GR mit Z1 Zähnen verwendet wird, muß das Signal v mit "2" multiplizieren, solange an ihrem Steuereingang ein Signal $\overline{A}$ anliegt, und muß v mit "1" multiplizieren, sobald an ihrem Steuereingang ein Signal A anliegt.

Welche der beiden alternativen Ausführungsformen der Geschwindigkeits-Wandlerschaltung WV Verwendung findet, ist jedoch von vornherein bekannt und im Steuergerät ST softwaremäßig berücksichtigt.

Um Störimpulse sicher auszuschalten, ist vorgesehen, daß ein vom Komparator C abgegebenes Ausgangssignal A erst dann nichtflüchtig abgespeichert wird, wenn dieses Ausgangssignal A und das Kupplungssignal k gleichzeitig für die Dauer einer vorgegebenen Zeit t erscheinen.

Um auch vor infolge von Störimpulsen möglicherweise auftretenden Fehl-Ermittlungen der richtigen Zähnezahl bzw. des ihr zugeordneten Signals sicher zu sein, ist vorgesehen, daß das vom Komparator C abgegebene Ausgangssignal A erst dann nichtflüchtig abgespeichert wird, wenn der Komparator C nach einer vorgegebenen Zahl w von Wiederholungen der Ermittlung der Zähnezahl des verwendeten Geberrades (GR) jedesmal das gleiche Ausgangssignal A abgegeben hat.

Sobald im Verlauf eines Tests (oder während einer Fahrt) ein Ausgangssignal A zum ersten Mal auftritt und nichtflüchtig abgespeichert wird, und damit feststeht, daß der Geschwindigkeitsgeber V ein Geberrad GR mit einer Zähnezahl Z2 verwendet, kann anschließend die weitere Ermittlung der Zähnezahl bis zur nächsten Initiierung des Steuergerätes eingestellt werden.

**Patentansprüche**

1. Kraftfahrzeug mit einem Antriebsmotor (M), einer Kupplung (K) und einer Kupplungs-Erkennungseinrichtung (KE), die bei eingekuppelter Kupplung (K) ein Kupplungssignal (k) abgibt, mit einem Getriebe (G) und wenigstens einem angetriebenen Rad (R), einem Motordrehzahlgeber (N), wenigstens einem Geschwindigkeitsgeber (V) zur Ermittlung der Fahrzeuggeschwindigkeit (v) oder der Getriebeabtriebsdrehzahl, der mit einem Geberrad (GR) mit entweder einer bestimmten ersten Zähnezahl (Z1) oder einer bestimmten zweiten Zähnezahl (Z2) ausgerüstet ist, und mit einem elektronischen Steuergerät (ST), welches eine Rechenschaltung (RS) aufweist, die das Verhältnis (n/v) von Motordrehzahl (n) zu Fahrzeuggeschwindigkeit (v) oder Getriebeabtriebsdrehzahl ermittelt, und einen Komparator (C) aufweist, der das Verhältnis (n/v) mit einem vorgegebenen Schwellwert (S) vergleicht, **dadurch gekennzeichnet,**

   - daß der Komparator (C) ein dem Geberrad (GR) mit der ersten bestimmten Zähnezahl (Z1) zugeordnetes erstes Ausgangssignal ($\overline{A}$) abgibt, wenn das Verhältnis (n/v) größer als der Schwellwert (S) ist, und ein dem Geberrad (GR) mit der zweiten bestimmten Zähnezahl (Z2) zugeordnetes zweites Ausgangssignal (A) abgibt, wenn das Verhältnis (n/v) kleiner als der Schwellwert (S) ist,

- daß ein Speicher (SP) vorgesehen ist, der bei Anschluß der Batterie an das Fahrzeug auf das erste Ausgangssignal ($\overline{A}$) gesetzt wird, und dessen Speicherinhalt nichtflüchtig in das zweite Ausgangssignal (A) geändert wird, wenn mit dem zweiten Ausgangssignal (A) gleichzeitig ein Kupplungssignal (k) vorliegt, und

- daß die dem im Speicher (SP) gespeicherten Ausgangssignal (A oder $\overline{A}$) zugeordnete Zähnezahl (Z2 oder Z1) des Geberrades (GR) für die Ermittlung der Fahrzeuggeschwindigkeit (v) oder Getriebeabtriebsdrehzahl herangezogen wird.

2. Kraftfahrzeug nach Anspruch 1, **dadurch gekennzeichnet,** daß die Kupplungs-Erkennungseinrichtung (KE) ein Kupplungssignal (k) abgibt, wenn die Motordrehzahl (n) innerhalb eines vorgegebenen Drehzahlfensters (n1 < n < n2) liegt und gleichzeitig die Motorlast (L) größer als ein vorgegebener Lastschwellwert (L1) ist.

3. Kraftfahrzeug nach Anspruch 1, **dadurch gekennzeichnet,** daß das vom Komparator (C) abgegebene zweites Ausgangssignal (A) nichtflüchtig abgespeichert wird, wenn dieses Ausgangssignal (A) und das Kupplungssignal (k) gleichzeitig für die Dauer einer vorgegebenen Zeit (t) erscheinen.

4. Kraftfahrzeug nach Anspruch 1, **dadurch gekennzeichnet,** daß das vom Komparator (C) abgegebene zweite Ausgangssignal (A) erst dann nichtflüchtig abgespeichert wird, wenn der Komparator (C) nach einer vorgegebenen Zahl (w) von Wiederholungen der Ermittlung der Zähnezahl (Z1, Z2) des verwendeten Geberrades (GR) jedesmal das zweite Ausgangssignal (A) abgegeben hat.

5. Kraftfahrzeug nach Anspruch 1, **dadurch gekennzeichnet,** daß nach nichtflüchtiger Abspeicherung des zweiten Ausgangssignals (A) die Ermittlung der Zähnezahl (Z1, Z2) des verwendeten Geberrades (GR) beendet wird.

6. Kraftfahrzeug nach einem der vorhergehenden Ansprüche, **dadurch gekennzeichnet,** daß die Funktionen der Rechenschaltung (RS), des Komparators (C), der Kupplungs-Erkennungseinrichtung (KE), einer Motordrehzahl-Wandlerschaltung (WN), einer Geschwindigkeits-Wandlerschaltung (WV), eines Und-Gliedes (UND) sowie eines Oder-Gliedes (ODER) softwaremäßig im Programm des Steuergerätes (ST) enthalten sind.

## Claims

1. Motor vehicle having a drive engine (M), a clutch (K) and a clutch detection device (KE) which, when the clutch (K) is engaged, emits a clutch signal (k), having a gearbox (G) and at least one driven wheel (R), an engine speed sensor (N), at least one speed sensor (V) for determining the speed (v) of the vehicle or the gearbox output speed, which speed sensor (V) is provided with a pickup wheel (GR) having either a specific first number of teeth (Z1) or a specific second number of teeth (Z2), and having an electronic control device (ST), which has an arithmetic circuit (RS) which determines the ratio (n/v) of the engine speed (n) to the speed (v) of the vehicle or gearbox output speed, and has a comparator (C) which compares the ratio (n/v) with a prescribed threshold value (S), characterized in that the comparator (C) emits a first output signal ($\overline{A}$), which is assigned to the pickup wheel (GR) with the first specific number of teeth (Z1), if the ratio (n/v) is greater than the threshold value (S), and emits a second output signal (A), which is assigned to the pickup wheel (GR) with the second specific number of teeth (Z2), if the ratio (n/v) is smaller than the threshold value (S), in that a memory (SP) is provided which, when the battery is connected to the vehicle, is set to the first output signal ($\overline{A}$), and the memory contents of which memory (SP) are changed, in a non-volatile fashion, into the second output signal (A) if a clutch signal (k) is present at the same time as the second output signal (A), and in that the number of teeth (Z2 or Z1), which is assigned to the output signal (A or $\overline{A}$) stored in the memory (SP), of the pickup wheel (GR) is used to determine the speed (v) of the vehicle or gearbox output speed.

2. Motor vehicle according to Claim 1, characterized in that the clutch detection device (KE) emits a clutch signal (k) if the engine speed (n) lies within a prescribed engine speed window (n1 < n < n2) and if simultaneously the engine load (L) is greater than a prescribed load threshold value (L1).

3. Motor vehicle according to Claim 1, characterized in that the second output signal (A) which is emitted by the comparator (C) is stored in a non-volatile fashion if the said output signal (A) and the clutch signal (k) appear simultaneously for the duration of a prescribed time (t).

4. Motor vehicle according to Claim 1, characterized in that the second output signal (A) which is emitted by the comparator (C) is not stored in a non-volatile fashion until the comparator (C) has each time emitted the second output signal (A) after a prescribed number (w) of repetitions of the determination of the number of teeth (Z1, Z2) of the pickup wheel (GR) used.

5. Motor vehicle according to Claim 1, characterized in that the determination of the number of teeth (Z1, Z2) of the pickup wheel (GR) used is terminated after non-volatile storage of the second output signal (A).

6. Motor vehicle according to one of the preceding claims, characterized in that the functions of the arithmetic circuit (RS), of the comparator (C), of the clutch detection device (KE), of an engine speed converter circuit (WN), of a speed converter circuit (WV), of an AND element (AND) and of an OR element (OR) are contained in the form of software in the program of the control device (ST).

**Revendications**

1. Véhicule automobile comportant un moteur d'entraînement (M), un embrayage (K) et un dispositif d'identification d'embrayage (KE), qui lorsque l'embrayage (K) est serré, délivre un signal d'embrayage (k), une boîte de vitesses (G) et au moins une roue motrice (R), un capteur (N) de la vitesse de rotation du moteur, au moins un capteur de vitesse (V) servant à déterminer la vitesse (v) du véhicule ou la vitesse de rotation délivrée à la sortie de la boîte de vitesses et qui est équipé d'une roue émettrice (GR) comportant soit un premier nombre déterminé de dents (Z1) soit un second nombre déterminé de dents (Z2), le véhicule comportant également un appareil de commande électronique (ST), qui comprend un circuit de calcul (RS) déterminant le rapport (n/v) de la vitesse de rotation (n) du moteur à la vitesse (v) du véhicule ou à la vitesse de rotation délivré à la sortie de la boîte de vitesses et un comparateur (C), comparant le rapport (n/v) à une valeur de seuil prédéterminée (S), caractérisé en ce

   - que le comparateur (C) envoie un premier signal de sortie ($\overline{A}$) associé à la roue émettrice (GR) avec le premier nombre déterminé de dents (Z1), lorsque le rapport (n/v) est supérieur à la valeur de seuil (S), et délivre un second signal de sortie (A) associé à la roue émettrice (GR) ayant le second nombre déterminé de dents (Z2), lorsque le rapport (n/v) est inférieur à la valeur de seuil (S),
   - qu'il est prévu une mémoire (SP), qui lors du raccordement de la batterie au véhicule, est positionnée sur le premier signal de sortie ($\overline{A}$) et dont le contenu est modifié, d'une manière non volatile, en le second signal de sortie (A), lorsqu'un signal d'embrayage (k) est présent en même temps que le second signal de sortie (A), et

   - que le nombre de dents (Z1 ou Z2) de la roue émettrice (GR), associé au signal de sortie (A ou $\overline{A}$) mémorisé dans la mémoire (SP), est utilisé pour la détermination de la vitesse (v) du véhicule ou de la vitesse de rotation délivrée à la sortie de la boîte de vitesses.

2. Véhicule automobile selon la revendication 1, caractérisé en ce que le dispositif d'identification d'embrayage (KE) délivre un signal d'embrayage (k), lorsque la vitesse de rotation (n) du moteur se situe dans une fenêtre prédéterminée de vitesses de rotation (n1 < n < n2) et que simultanément la charge (L) du moteur est supérieure à une valeur de seuil de charge prédéterminée (L1).

3. Véhicule automobile selon la revendication 1, caractérisé en ce que le second signal de sortie (A) délivré par le comparateur (C) est mémorisé d'une manière non volatile, lorsque ce signal de sortie (A) et le signal d'embrayage (k) apparaissent simultanément pendant la durée d'un intervalle de temps prédéterminé (t).

4. Véhicule automobile selon la revendication 1, caractérisé en ce que le second signal de sortie (A) délivré par le comparateur (C) est mémorisé d'une manière non volatile uniquement lorsque le comparateur (C) a délivré chaque fois le second signal de sortie (A), au bout d'un nombre prédéterminé (w) de répétitions de la détermination du nombre de dents (Z1, Z2) de la roue émettrice (GR) utilisée.

5. Véhicule automobile selon la revendication 1, caractérisé en ce qu'après une mémorisation non volatile du second signal de sortie (A), la détermination du nombre de dents (Z1, Z2) de la roue émettrice (GR) utilisée est terminée.

6. Véhicule automobile selon l'une des revendications précédentes, caractérisé en ce que les fonctions du circuit de calcul (RS), du comparateur (C), du dispositif d'identification d'embrayage (KE), d'un circuit (WN) formant convertisseur de la vitesse de rotation du moteur, d'un circuit (WV) formant convertisseur de vitesse et d'un circuit ET (UND) ainsi que d'un circuit OU (ODER) sont contenus sous forme logicielle, dans le programme de l'appareil de commande (ST).

FIG 1

## FIG 2

## FIG 3

| Spalte→ | 1 | 2 | 3 | 4 | 5 |
|---|---|---|---|---|---|
| Zeile ↓ 1 | n = 5000 U/min | | | | |
| | ( vmax = 200 km/h ; nmax = 6400 U/min ) | | | | |
| 2 | Gang | v (Z1) | v (Z2) | n/v (Z1) | n/v(Z2) |
| 3 | I | 40 km/h | (80) | 125,0 | 62,5 |
| 4 | II | 70 " | (140) | 71,4 | 35,7 |
| 5 | III | 100 " | (200) | 50,0 | 25,0 |
| 6 | IV | 140 " | (280) | 35,7 | 17,9 |
| 7 | V | 180 " | (360) | 27,8 | 13,9 |